# EUROPEAN PATENT APPLICATION

(11) **EP 3 407 240 A1**
(43) Date of publication of application: **28.11.2018**
(21) Application number: 18172834.6
(22) Date of filing: 17.05.2018
(51) Int. Cl.: G06F 21/62, G06F 11/14

(54) **DATA PROTECTION METHOD AND ASSOCIATED APPARATUS**

(30) Priority: 23.05.2017 US 201762510236 P; 10.05.2018 US 201815975788
(71) Applicant: Synology Incorporated, Taipei 103 (TW)
(72) Inventor: Lee, Wen-Sung, Taipei 103 (TW); Huang, Hsin-Wei, Taipei 103 (TW); Wu, Wen-Chiao, Taipei 103 (TW); Wu, Wei-Cheng, Taipei 103 (TW); Chen, Kuan-Yu, Taipei 103 (TW)
(74) Representative: Michalski Hüttermann & Partner Patentanwälte mbB

(57) **Abstract**

A data protection method and associated apparatus are provided. The data protection method may include: running a data protection application on a host server system (10), the data protection application being configured to protect a data set stored in a tenant server system (5), wherein the host server system (10) and the tenant server system (5) are administered by different entities; receiving a plurality of versions of the data set from the tenant server system (5); and issuing at least one version request to get at least one specific version of the data set from the tenant server system (5), wherein the at least one specific version and the plurality of versions of the data set form a sequential version order of the data set.

## Description

### Field of the Invention

The present disclosure is related to software as a service (SaaS), and more particularly, to a data protection method and associated apparatus such as a host server system.

### Background of the Invention

SaaS technologies may provide software through Internet, which may be regarded as a software delivery model in which software may be licensed on a subscription basis and may be centrally hosted. SaaS may have become a common delivery model for many business applications, such as office collaboration tools like Google G Suite™. Although SaaS vendors seem to be pretty secure, data loss may occur because of human mistakes, such as programmatic errors or malicious activity. As a result, there is a need to back up SaaS data in a way that facilitates a fast return to operational readiness.

### Summary of the Invention

This in mind, the application aims at providing a method and associated device in order to solve the problems mentioned above.

This is achieved by a data protection method and associated host server system according to claims 1 and 8. The dependent claims pertain to corresponding further developments and improvements.

As will be seen more clearly from the detailed description following below, the claimed data protection method includes: running a data protection application on a host server system, the data protection application being configured to protect a data set stored in a tenant server system, in which the host server system and the tenant server system are administered by different entities; receiving a plurality of versions of the data set from the tenant server system; and issuing at least one version request to get at least one specific version of the data set from the tenant server system, in which the at least one specific version and the plurality of versions of the data set form a sequential version order of the data set.

In addition, the claimed host server system includes a network interface circuit, a storage device interface circuit, and a processing circuit that is coupled to the network interface circuit and the storage device interface circuit. The network interface circuit may be arranged to couple the host server system to at least one network, and the storage device interface circuit may be arranged to install at least one storage device for storing information. In addition, the processing circuit may be arranged to control operations of the host server system, for example, the operations may include: running a data protection application on the host server system, the data protection application being configured to protect a data set stored in a tenant server system, in which the host server system and the tenant server system are administered by different entities; receiving a plurality of versions of the data set from the tenant server system; and issuing at least one version request to get at least one specific version of the data set from the tenant server system, in which the at least one specific version and the plurality of versions of the data set form a sequential version order of the data set.

### Brief Description of the Drawings

In the following, the invention is further illustrated by way of example, taking reference to the accompanying drawings. Thereof:
- Fig. 1: is a block diagram illustrating a host server system according to an embodiment of the present disclosure, in which the host server system is capable of performing continuous software as a service (SaaS) backup regarding SaaS data of a tenant server system;
- Fig. 2: illustrates a continuous backup control scheme of a data protection method according to an embodiment of the present disclosure, in which a data protection application including program modules corresponding to the data protection method may run on the host server system shown in Fig. 1;
- Fig. 3: is a block diagram illustrating the architecture of the data protection application according to an embodiment of the present disclosure;
- Fig. 4: is a schematic diagram illustrating message flows of transmitting identification information between the tenant server system and the host server system in accordance with an embodiment of the present disclosure;
- Fig. 5: is a schematic diagram illustrating message flows of transmitting identification information between the tenant server system and the host server system in accordance with another embodiment of the present disclosure;
- Fig. 6: illustrates an example of a task framework of the data protection application;
- Fig. 7: is a schematic diagram illustrating a data de-duplicate method across different user accounts in accordance with an embodiment of the present application;
- Fig. 8: illustrates an example of all versions backup regarding the continuous backup control scheme;
- Fig. 9: illustrates some implementation details of the all versions backup; and
- Fig. 10: illustrates a working flow of the data protection method according to an embodiment of the present disclosure.

### Detailed Description

Embodiments of the present disclosure provide a data protection method and associated apparatus such as a host server system, for protecting user data on a tenant server system, and more particularly, performing continuous software as a service (SaaS) backup. The term "SaaS" may refer to a software distribution model in which a third-party provider hosts applications and makes them available to customers over the Internet. The user data to be protected, such as that of the applications hosted by the third-party provider, may be regarded as SaaS data. There are some advantages of SaaS, such as agility and staffing. Regarding agility, a SaaS vendor may provide various supports in ways that on-premises management (e.g. associated maintenance, etc.) is unable to do so. SaaS vendors can adapt to rapid change for users' needs. Regarding staffing, SaaS applications may reduce the need for on-premises management, such as updates, patches, and maintenance. Although SaaS vendors seem to be pretty secure, data loss may occur because of human mistakes. The present disclosure can back up the SaaS data in a way that facilitates a fast return to operational readiness (e.g. Recovery Time Objective (RTO)). For example, the host server system may include at least one network storage server (e.g. one or more network storage servers, such as one or more network attached storage (NAS) servers), and may obtain and store a series of continuous versions of the SaaS data into the network storage server. The series of continuous versions may include more versions than normal versions, and more particularly, may include some hidden versions of the SaaS data that are typically not accessible (e.g. not viewable) on a SaaS user interface (Ul). As a result, the present disclosure can properly protect the SaaS data since there is no data loss of any version.

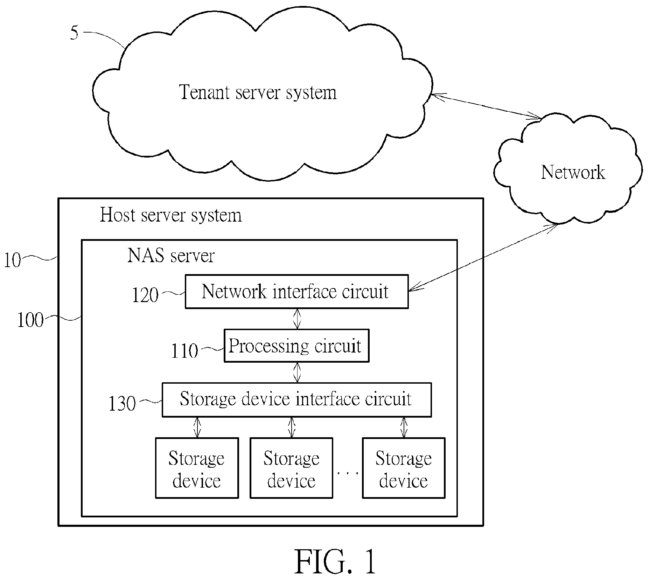

Fig. 1 is a block diagram illustrating a host server system 10 according to an embodiment of the present disclosure, in which the host server system 10 is capable of performing continuous SaaS backup regarding SaaS data of a tenant server system 5. The example of the tenant sever system may include a tenant server that runs a software for one or more tenants over the internet. The host server system 10 may include a NAS server 100, which can be taken as an example of the one or more NAS servers. The NAS server 100 may include a processing circuit 110 (e.g. at least one processor and associated circuit such as RAM, bus, chipset, etc.), a network interface circuit 120, and a storage device interface circuit 130, and more particularly may include one or more storage devices (e.g. one or more hard disk drives (HDDs) and/or one or more solid state drives (SSDs)) such as that shown in Fig. 1. According to this embodiment, the network interface circuit 120 is arranged to couple the NAS server 100 to at least one network, to allow the NAS server 100 to link to the tenant server system 5. The storage device interface circuit 130 is arranged to install the one or more storage devices at the NAS server 100, in which the one or more storage device may be arranged to store the SaaS data obtained from the tenant server system 5, for further processing such as recovery of the SaaS data. The processing circuit 110 is arranged to control operations of the host server system 10 (more particularly, operations of the NAS server 100 therein) according to the data protection method of the present disclosure.

For example, under control of the processing circuit 110, the host server system 10 may provide at least one network-based UI to allow controlling the host server system 10 to have a continuous SaaS backup configuration regarding a set of cloud drives, in which the set of cloud drives are provided by at least one SaaS vender, and the set of cloud drives are accessible through a set of SaaS accounts, respectively. Based on the continuous SaaS backup configuration, the processing circuit 110 may control the host server system 10 to monitor the set of cloud drives through the set of SaaS accounts, respectively, and to perform backup on the set of cloud drives to store versions of each file of each cloud drive of the set of cloud drives into the host server system 10, without omitting any change in the cloud drive. Under control of the processing circuit 110, the host server system 10 may monitor all events related to changes in the cloud drive, and the events may include at least one change event regarding file change of the file. For example, the events may include a delete event regarding file deletion, a user defined event regarding the cloud drive, etc. In addition, during controlling the host server system 10 to have the continuous SaaS backup configuration, the processing circuit 110 may obtain identification information associated with the set of SaaS accounts through the aforementioned at least one network-based Ul, to make the host server system 10 to have authorization of at least one portion of the set of SaaS accounts.

According to some embodiments, the aforementioned at least one SaaS vender may include a plurality of SaaS venders, such as a first SaaS vender and a second SaaS vender. The set of cloud drives may include multiple first cloud drives provided by the first SaaS vender, and include multiple second cloud drives provided by the second SaaS vender. In addition, the set of SaaS accounts may include multiple first SaaS accounts and multiple second SaaS accounts, in which the first cloud drives are accessible through the first SaaS accounts, respectively, and the second cloud drives are accessible through the second SaaS accounts, respectively.

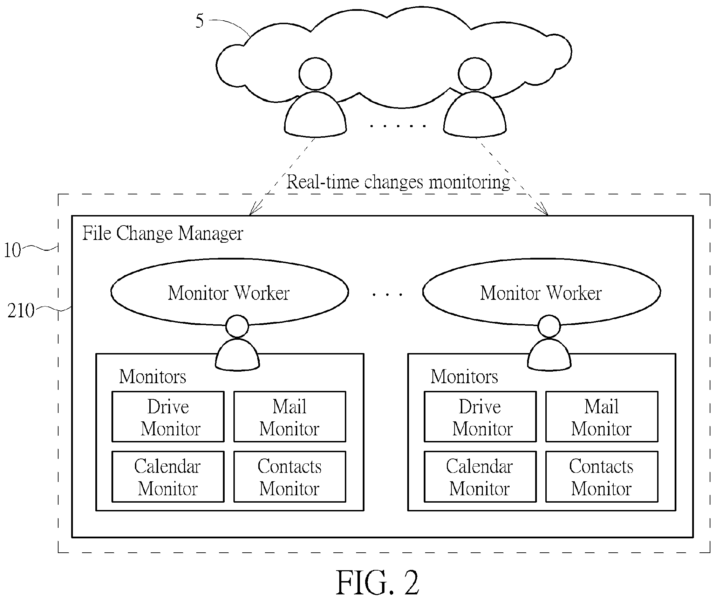

Fig. 2 illustrates a continuous backup control scheme of the data protection method according to an embodiment of the present disclosure, in which a data protection application including program modules corresponding to the data protection method may run on the host server system 10 (e.g. the processing circuit 110), for controlling the operations of the host server system 10 according to the data protection method. The file change manager 210 may be taken as an example of the program modules of the data protection application running on the host server system 10. In this embodiment, the file change manager 210 may include multiple program sub-modules such as at least one monitor worker (e.g. one or more monitor workers) corresponding to the third-party provider, and further include the associated monitors. For example, the aforementioned at least one monitor worker may include multiple monitor workers corresponding to multiple tenant server systems {5} of multiple third-party providers, respectively, and each monitor worker of the monitor workers may utilize the corresponding monitors including a drive monitor, a mail monitor, a calendar monitor, and a contacts monitor to monitor real-time changes of the drive function, the mail function, the calendar function, and the contacts function of the SaaS data on one of the multiple tenant server systems {5}, such as the tenant server system 5 corresponding to the aforementioned each monitor worker. No matter whether the data to be protected is related to one or more third-party providers, the host server system 10 may perform backup regarding the latest changes of the SaaS data on one or more tenant server systems {5} of the one or more third-party providers to protect the SaaS data thereon.

According to this embodiment, the processing circuit 110 is capable of running the data protection application on the host server system 10, and the data protection application is configured to protect a data set stored in the tenant server system 5, such as at least one portion (e.g. a portion or all) of the SaaS data, in which the host server system 10 and the tenant server system 5 are administered by different entities. Examples of the data set may include, but are not limited to: public cloud documents, mail data, calendar data, etc. Under control of the processing circuit 110, the host server system 10 may receive a plurality of versions of the data set from the tenant server system 5, and may issue at least one version request to get at least one specific version of the data set from the tenant server system 5, in which the aforementioned at least one specific version and the plurality of versions of the data set form a sequential version order of the data set. As a result, the host server system 10 receives each version of these versions of the data set (e.g. the aforementioned at least one specific version and the plurality of versions), to protect the data contents of the above-mentioned each version. For example, the plurality of versions of the data set may represent the whole of the SaaS data, but the present disclosure is not limited thereto. In addition, a command for issuing the aforementioned at least one version request may vary, for example, depending on an application programming interface (API) as suggested by the SaaS vendor. Additionally, regarding the sequential version order of the data set, the aforementioned at least one specific version and the plurality of versions of the data set constitute continuous versions of the data set (e.g. the SaaS data regarding file, image, mail, etc.), such as the versions having continuous version numbers. For example, the plurality of versions of the data set forms a non-sequential version order of the data set, and after obtaining the aforementioned at least one specific version, the host server system 10 owns the continuous versions of the data set. As the host server system 10 obtains the continuous versions of the data set and can recover the SaaS data according to the continuous versions when needed, no data loss should occur. According to some embodiments, the host server system 10 may be administered by a first entity (such as a home user or an enterprise who owns host server system 10, an administer of the host server system 10), and the tenant server system 5 may be administered by another entity that is typically different from the first entity (such as SaaS providers, in which the first entity may subscribe or freely use the services of the SaaS providers).

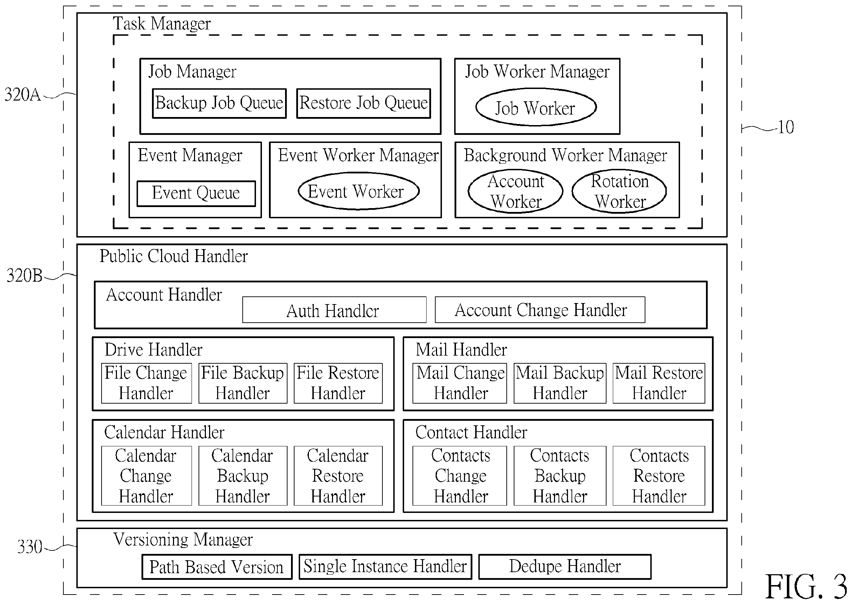

Fig. 3 is a block diagram illustrating the architecture of the data protection application according to an embodiment of the present disclosure. The task manager 320A, the public cloud handler 320B, and the version manager 330 may be taken as examples of the program modules of the data protection application running on the host server system 10. The task manager 320A may include a set of program sub-modules, such as a job manager, a job worker manager, an event manager, an event worker manager, and a background worker manager. The job manager may store and manage a backup job queue (e.g. a queue for queuing backup jobs) and a restore job queue (e.g. a queue for queuing restore jobs), and the job worker manager may manage one or more job workers for working on the jobs (e.g. the backup jobs and/or the restore jobs). The event manager may store and manage an event queue (e.g. a queue for queuing events), and the event worker manager may manage one or more event workers for working on the events, in which the events may include a variety of data change events (e.g. a file change). The background worker manager may manage one or more background workers that typically work in the background, such as an account worker and a rotation worker, for working on some issues regarding user accounts changes and backup version rotations, respectively.

In addition, the public cloud handler 320B may include some program sub-modules such as some handlers for handling associated operations regarding the public cloud(s) (e.g. the one or more tenant server systems {5} of the one or more third-party providers). For example, the public cloud handler 320B may include an account handler, a drive handler, a mail handler, a calendar handler, and a contact handler. The account handler may include an authentication (or "Auth" in Fig. 3, for brevity) handler and an account change handler, arranged to handle authentication and account change detection for the accounts, respectively. For example, with aid of the account change handler, the host server system 10 may monitor an account change event (e.g. an event of creating a new account, an event of deleting an account, etc.) of a target domain associated with the tenant server system 5. When the account change event is detected, the host server system 10 may receive another data set associated with a changed account. Regarding the target domain, a company may apply for a business account of a certain public cloud, to allow the internal staffs of the company to share the service of the public cloud. For example, when using the enterprise edition of the public cloud, the company may have a company-specific domain provided by the second entity, in which the company-specific domain may be taken as an example of the target domain. As a result of monitoring any account change event of the target domain, the host server system 10 can ensure that the files of all users of the target domain on the public cloud are backed up, in order to prevent file loss.

Additionally, there may be multiple groups of service handlers corresponding to multiple services, respectively. For example, the drive handler may include a file change handler, a file backup handler, and a file restore handler, arranged to handle file change detection operations, file backup operations, and file restoring operations, respectively. The mail handler may include a mail change handler, a mail backup handler, and a mail restore handler, arranged to handle mail change detection operations, mail backup operations, and mail restoring operations, respectively. The calendar handler may include a calendar change handler, a calendar backup handler, and a calendar restore handler, arranged to handle calendar change detection operations, calendar backup operations, and calendar restoring operations, respectively. The contact handler may include a contacts change handler, a contacts backup handler, and a contacts restore handler, arranged to handle contacts change detection operations, contacts backup operations, and contacts restoring operations, respectively. Furthermore, the version manager 330 may include some program sub-modules for handling version issues, such as a path based versioning unit, a single instance handler, and a dedupe handler, arranged to perform path-based versioning operations (e.g. maintaining contents and metadata of different versions of a file, in which the metadata including the directory structure of different versions of a file), single instance maintaining operations (e.g. maintaining single instance such as the same data set commonly owned or shared by multiple users), and dedupe operations, respectively.

According to some embodiments, in the architecture shown in Fig. 3, the task manager 320A may perform data backup of the SaaS data on multiple domains with multiple tasks. The job manager may manage a backup job or a restore job. For a job such as a backup job, the job worker may detect change(s) of the data set (e.g. a file), and when detecting any change of the data set (e.g. the file), the job worker may generate an event. The event worker may perform download or upload when needed, and the associated command may be sent out from the event worker. Regarding the background worker manager, the account worker may detect whether any account is newly added or deleted, and the rotation worker may manage retention policy (e.g. whether to reserve all versions, or whether to reserve versions within a certain number of days). Regarding the account handler, the authentication (or "Auth" in Fig. 3, for brevity) handler may send identification information to the job workers, the event workers, and the account change workers to allow these workers to get data from the tenant server system 5 according to the identification information.

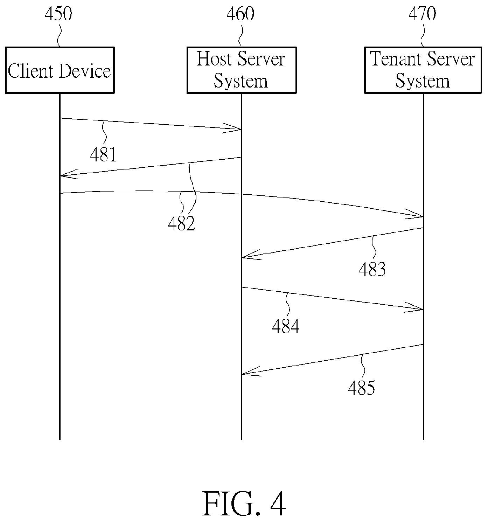

Specifically, the identification information may include a plurality of identifiers, such as an access identifier and a data set identifier. In order to establish connection between the host server system 450 and the tenant server system 460, the tenant server system 460 needs to authorize the host server system 450 to access data set (such as files) stored in the tenant server system 460. The authorization operation is implemented according to the identification information. Fig. 4 is a schematic diagram illustrating message flows of transmitting identification information between the tenant server system and the host server system in accordance with an embodiment of the present disclosure. In the embodiment of Fig. 4, the client device 450 (such as a mobile phone, tablet, or personal computer) may manage the data protection application of the host server system 460 through the internet. For example, the client device 450 may manage the data protection application through the browser, or there may be a corresponding client version of the data protection application that can connect to the data protection application running on the host server system 460. The client device 450 may transmit a backup request message 481 to the host server system 460, in which the backup request message is utilized to trigger backup operation to back up the data set stored in the tenant server system 470. In an embodiment, the client device 450 may transmit a HTTP/HTTPS request to the host server system 460 to trigger the backup operation through the browser, but the present application is not limited thereto.

After receiving the backup request message 481, the host server system 460 may forward a setting page to the tenant server system (message flow 482). For example, a setting page shown on the browser that is originally used to manage the data protection application may be forwarded to a setting page of the tenant server system 470 to enter the authorization information, such as account number and password. The tenant server system 470 may verify the authorization information obtained from the client device 450. After verifying the authorization, the tenant server system 470 may transmit the access identifier (message flow 483) to the host server system 460 in order to allow the host server system 460 to access the data set stored in the tenant server system 470. In an example, the access identifier may be an access token, and the host server system 460 may exchange messages with the tenant server system 470 according to the access token.

After the host server system 460 has a permission to access the data set stored in the tenant server system 470, the host server 460 may begin to back up a plurality of versions of the data set, and the host server 460 may further need to request a specific version of the data set, so as to form a sequential version order of the data set in the host server system 460 (Message flow 484). In an embodiment, when initiating backup of the versions of the data set, the tenant server system 470 may transmit at least one data set identifier to the host server system 460 (Message flow 485). The host server system 460 may download the data set from the tenant server system 470 according to the data set identifier. For example, when the host server system 460 requests to download a specific version of the data set, the tenant server system 470 may transmit a plurality of data set identifiers to the host server system 460. The plurality of the data set identifiers are associated with the specific version of the data set. That is, the plurality of the data set identifiers are utilized to download the specific version of the data set. Each one of the data set identifiers may be used to request (or download) a portion of the specific version of the data set. For example, if there are three data set identifiers used for requesting the specific version of the data set, then each data set identifier can only download one third portion of the specific version of the data set. After the download of the specific version of the data set is complete, the plurality of the data set identifier may be discarded. By using a plurality of data set identifiers, the data set backup efficiency from the tenant server system 470 can be improved. For example, the plurality of portions of the data set can be transmitted from the tenant server system 470 to the host server system 460 simultaneously according to the plurality of the data set identifiers, and if one of the portions of the data set fails to download to the host server system 460, only the portion unsuccessfully downloaded needs to be downloaded again, instead of downloading the whole data set. In an embodiment, the data set identifier may include a page token, but the present disclosure is not limited thereto.

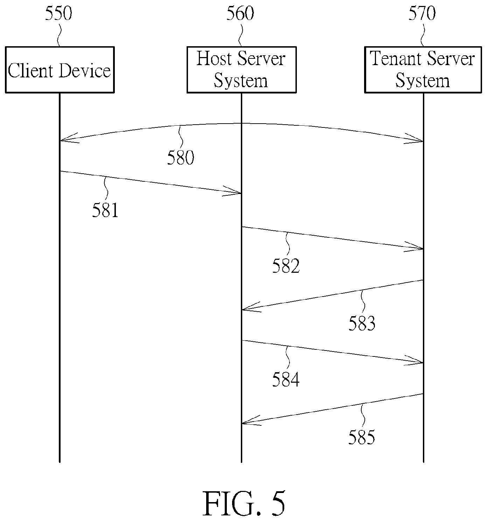

Fig. 5 is a schematic diagram illustrating message flows of transmitting identification information between the tenant server system and the host server system in accordance with another embodiment of the present disclosure. In the embodiment of Fig. 5, the client device 550 may communicate with the tenant server system 570 directly (without interference of the host server system 560) to obtain an access identifier (message flow 580). When the client device 550 manage the data protection application of the host server system 460 through the internet, the client device 550 may import the access identifier into the host server system 560 (message flow 581). After this, the host server system 460 may establish the connection between the tenant server system 570 according to the imported access identifier. For example, the host server system 460 may transmit the imported access identifier to the tenant server system 570 (message flow 582), and the tenant server system 570 may verify the access identifier to allow the host server system 460 accessing the data set stored in the tenant server system 570. After the tenant server system 570 informs the host server system 460 that verification is complete and the host server system 560 can access the data set in the tenant server system 570 (message flow 583), the host server system 560 may begin to back up a plurality of versions of the data set. The remaining message flows 584 and 585 are similar to the message flows 484 and 485, so the detailed descriptions of the message flows 584 and 585 have been omitted for brevity. In the embodiments of Fig. 4 and Fig. 5, the host server system never own authorization information, such as the user's personal information including account number and password for login in the tenant server system, the user's personal information can be properly protected. In addition, the account change handler may be regarded as implementation of the account worker.

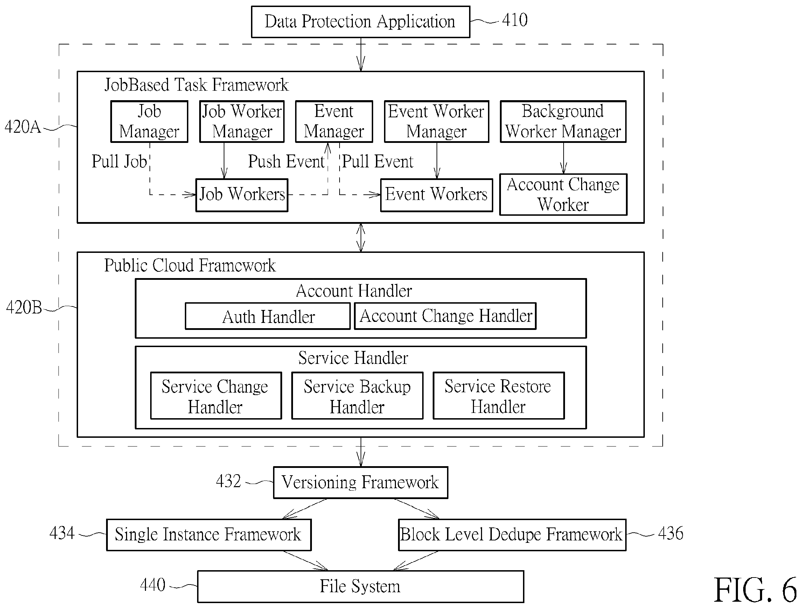

Fig. 6 illustrates an example of a task framework of the data protection application, which may include the versioning framework 432, the single instance framework 434, and the block level dedupe framework 436, respectively. The job-based (or JobBased) task framework 420A and the public cloud framework 420B may be taken as examples of the task manager 320A and the public cloud handler 320B, respectively, and the versioning framework 432, the single instance framework 434, and the block level dedupe framework 436 may be taken as examples of the path based versioning unit, the single instance handler, and the dedupe handler in the version manager 330, respectively. For example, under control of the job worker manger, the job workers may pull the jobs from the job manager (e.g. job queues therein, such as the backup job queue and the restore job queue shown in Fig. 3), work on the jobs, and push events to the event manger. Under control of the event worker manager, the event workers may pull the events from the event manager and work on the events. Under control of the background worker manager, the account change worker may work on account change detection, and more particularly, may update the versions database (e.g. the database of the continuous versions of the data set) associated with the changed account in the host server system 10 when creating or removing accounts of the SaaS occurs, for example, in response to any change of staff members of the company using the host server system 10. According to this embodiment, the service handler corresponding to one or more SaaS services (e.g. a drive service, a mail service, a calendar service, and a contact service) may represent a combination of the drive handler, the mail handler, the calendar handler, and the contact handler shown in Fig. 3, and the service change handler, the service backup handler, and the service restore handler in the service handler may perform the operations of the corresponding change handlers, the corresponding backup handlers, and the corresponding restore handlers in the architecture shown in Fig. 3, respectively; and the versioning framework 432, the single instance framework 434, and the block level dedupe framework 436 may perform versioning control, single instance control, and block level dedupe control on the file system 440 of the operating system (OS) of the host server system 10, respectively; but the present disclosure is not limited thereto.

Regarding the JobBased task framework, some implementation details may be described as follows. In the beginning, the data protection application 410 may start working. Taking the user data on the public cloud as an example of the SaaS data to be protected (e.g. the data set), assume that a task for backup of the user data on the public cloud has been established. For example, there may be three user accounts on the public cloud whose user data should be protected by the host server system 10, and there may be three backup jobs corresponding to the three user accounts. Therefore, the job manager may notify the job workers of the three backup jobs. The job worker manager may manage job workers. For example, the job manager may create a job worker to process a backup job, or the job manager may end the job worker when the backup job is complete. In some embodiments, the job workers may detect any SaaS data change (e.g. a change of SaaS data, such as a change of a file) for each of these user accounts. In an ideal case, it is best that a job worker corresponds to a user account, but the present disclosure is not limited thereto. For example, it is also workable that a job worker corresponds to multiple users. Although version loss may occur, the host server system 10 is capable of restore the lost version, and therefore is reliable. In comparison with this, the related art lacks a reliable architecture to do so. In addition, when detecting a SaaS data change such as a file change, the job worker may generate an event, and this event may be transmitted to the event manager. The event workers may pull event from the event manager, so the event works is aware of the existence of the latest version of the data set (such as that of the files of the three user accounts). When detecting the existence of the latest version, the event works may download the latest version. The authentication (or "Auth" in Fig. 6, for brevity) handler may take charge of refreshing identifiers, such as data set identifier including page tokens to the job workers and the event workers, and the job workers and the event workers holding these identifiers may communicate with the tenant server system 5.

After the latest version is downloaded, the file change handler may detect whether the version numbers are continuous or not. When detecting that the version numbers are not continuous, the file change handler may determine that version loss occur and generate other event(s) to the event manager, and the event manager may take charge of issuing a command to get the lost version(s). In addition, the path based versioning unit such as the versioning framework 432 may manage version architecture of files (e.g. the architecture of the directories for storing the files), the single instance handler such as the single instance framework 434 may maintain single-instancing among a plurality of versions of a data set and the data dedupe handler such as the block level dedupe framework 436 may store only changed block to avoid block duplication regarding the data set.

The single instance handler and the data dedupe handler can save the storage space of the host server system 10. More specifically, in a scenario of file collaboration environment through the internet, different user accounts may edit on the same file on the tenant server system, and produce a lot of versions of the file under every user account. The plurality of versions of the file may have a lot of duplicated parts under the same user account and also under the different user accounts. The present application can de-duplicate data across different user accounts.

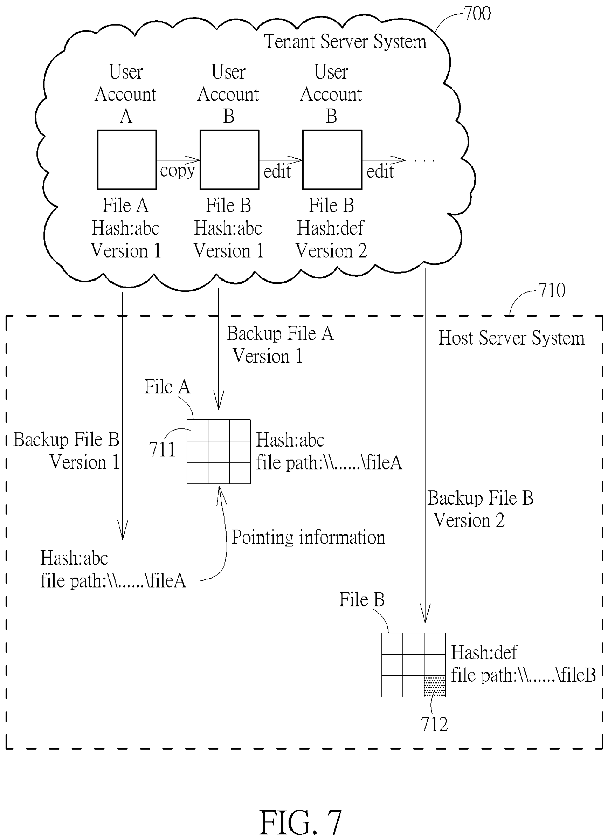

Fig. 7 is a schematic diagram illustrating a data de-duplicate method across different user accounts in accordance with an embodiment of the present application. In Fig. 7, user account A may create a file A in the tenant server system 700. The file A may have a characteristic value (such as the hash value "abc" in Fig. 7), and is the first version stored in the tenant sever system 700 associated with the user account A. The user account A may share File A with the user account B, and the user account B may copy the file A to another file path and may or may not rename the file A. For better comprehension, the present application uses file B to represent the file copied from the file A of the user account A.

When the host server system 710 firstly receives the file A associated with the user account A, the host server system 710 may full download the entire data set of the file A. In an embodiment, the file A may be divided into a plurality of data block 711. When the first version of file A is transmitted to the host server system 710, the host server system 710 receives each and every piece of the data block 711 of the file A (the full download). Furthermore, the host server system 710 may receive a characteristic value of the first version of the file A, and may also record the source file path of the file A. In an embodiment, the characteristic value may be a hash value (such as the hash value "abc" in Fig. 7), but the present disclosure is not limited thereto.

In addition to the data set of the user account A, the present disclosure can also download the data set associated with the user account B. For example, in an embodiment of Fig. 7, the host server system 710 receives the File B associated with the user account B, and also receives a characteristic value of the first version of the file B. In Fig. 7, the hash value of the file B is the same as the hash value of the file A. This means that the file B and the file A are the same (for example, the file B is copied from the file A). Since the file B and the file A have the same characteristic value (such as the same hash value), the host server system 710 does not store the file B again, and only record the associated pointing information that pointing the file B to the file A. The pointing information may refer the file B to the physical storage location of the file A in the host server system 710, so the same data set is stored merely one time in the host server system 710.

In an embodiment, the characteristic value of the first version of the file B is transmitted to the host server system 710 instead of transmitting the entire data set of the first version of the file B. If the host serve system 710 already stores the same characteristic value of the first version of the file B, then there is no need to transmit other portions of the first version of the file B, so as to save the bandwidth. In an embodiment, the host server system 710 may issue a HTTPS command to download or receive the file B.

Referring to Fig. 7, if the file B is edited by the user account B, then the second version of the file B may be created. The second version of the file B has a characteristic value different than the first version of the file B. As a result, the file B are entirely transmitted to the host server system 710. The host server system 710 may store the file B in data blocks. In an embodiment, the data dedupe handler can further obtain or calculate the characteristic value of each of the data blocks of the file B. The data dedupe handler may discard the data blocks that have already been stored in the host server system 710, and store only the changed data block 712. By using the single instance handler and the data dedupe handler, the data de-duplication can be implemented across different user accounts, so as to save the storage space of the host server system 710. The present disclosure can improve the data storage space especially on protecting the data set of the tenant server system 700 having file collaboration services.

According to some embodiments, the processing circuit 110 may store the plurality of versions of the data set and the at least one specific version of the data set to the host server system 10 (e.g. the one or more storage devices therein). Specifically, under control of the processing circuit 110, the host server system 10 may monitor a change event of a directory including a predetermined version of the data set. All the data changed in the directory is monitored. For example, once the predetermined version of the data set has changed, the change event will be detected by the processing circuit 110. The processing circuit 110 receives a latest version of the data set after the change event is detected, in which the latest version of the data set may be revised from the predetermined version of the data set, and the predetermined version may represent a version having a latest version number at a certain time point. For example, when the SaaS data such as a file is changed, the version number is increased, more particularly, with the increment of one. The version number of the latest version is typically greater than the version number of the predetermined version, and the version number difference between the latest version and the predetermined version (e.g. the difference between the version number of the latest version and the version number of the predetermined version) is greater than or equal to one. For example, when the version number difference is equal to three, some intermediate versions of the data set are lost. As the latest version is the latest in comparison with the predetermined version, the latest version may be changed or revised from the predetermined version. When the version number difference is equal to one, the latest version is changed or revised from the predetermined version directly. When the version number difference is greater than one, the latest version is changed or revised from the predetermined version indirectly, for example, through the revision of the intermediate version(s). If there are any lost version, for example the intermediate version, the host system 5 will get the intermediate version. As a result, the host server system 10 can receive each version of these versions of the data set (e.g. the aforementioned at least one specific version and the plurality of versions) to protect the data contents of the above-mentioned each version, and more particularly, stores the data contents of these versions of the data set into the one or more storage devices of the host server system 10, to prevent data loss of any of these versions.

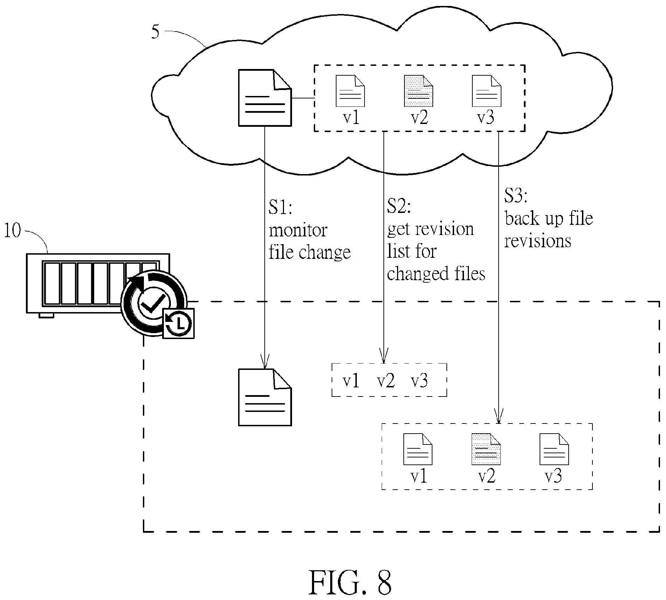

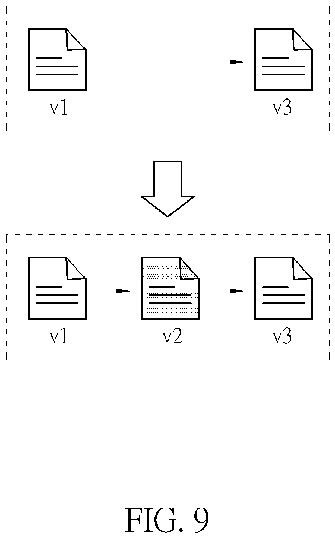

Fig. 8 illustrates an example of all versions backup regarding the continuous backup control scheme, and Fig. 9 illustrates some implementation details of the all versions backup. Two non-continuous versions v1 and v3 of a file within the SaaS data may be taken as an example of the plurality of versions of the data set, and a version v2 of this file may be taken as an example of the aforementioned at least one specific version, in which the order of the versions v1, v2, and v3 may be taken as an example of the sequential version order of the data set, and the versions v1, v2, and v3 may be taken as an example of the continuous versions. According to this embodiment, the version v1 is initially generated on the tenant server system 5. Afterward, the version v2 may be generated on the tenant server system 5 due to a first activity of the user, for example, after two hours since the version v1 is generated. In a short time, the version v3 may be generated on the tenant server system 5 due to a second activity of the user, for example, after a few seconds since the version v2 is generated. As there is only a few second between the time of generating the version v2 and the time of generating the version v3, the tenant server system 5 may merge the changes of the version v2 and the version v3, but the version v2 may be important to the user in some occasions. As shown in the upper half of Fig. 9, the version v2 is merged into version v3 by the tenant server system 5, and therefore is not viewable by the user on the SaaS Ul, in which the user cannot access the version v2 through the SaaS Ul. During the all versions backup, in Step S1, the host server system 10 may monitor file change(s) such as that of the file; in Step S2, the host server system 10 may get revision list for changed files (e.g. the list of the versions v1, v2, and v3); and in Step S3, the host server system 10 may back up file revisions (e.g. the versions v1, v2, and v3). As a result of the all versions backup, the host server system 10 holds all of the continuous versions v1, v2, and v3 of the file, such as that shown in the lower half of Fig. 9.

According to this embodiment, under control of the processing circuit 110 running the data protection application, the host server system 10 may monitor whether there is any change of the SaaS data (e.g. the files on the SaaS application). When detecting any change of the SaaS data (e.g. the files on the SaaS application), the host server system 10 may get the new version(s) of the data set (e.g. the latest version, and the intermediate version(s) if exist) from the tenant server system 5. As a result of holding the new version(s), the host server system 10 can prevent data loss. For example, the host server system 10 may issue a content request to get the latest version of the data set. Regarding the associated advantages of issuing the content request to get the latest version of the data set, as the file getting operation is triggered by the data protection application, the host server system 10 has the privilege to control the whole backup in an active manner. As a result, it is safer for the host server system 10 (e.g. the host server system 10 can only back up some user accounts, and will not receive any unexpected file such as a file that belongs to the user accounts that are not in the back up list), and the host server system 10 has the chance to adjust, and the host server system 10 can save bandwidth (e.g. prevent unnecessary file transmission). In addition, the host server system 10 may parse the latest version of the data set to determine whether the latest version of the data set and the predetermined version of the data set are received in sequence. As a result, the host server system 10 may determine whether the latest version and the predetermined version are continuous versions of the data set, and more particularly, determine whether there is any intermediate version between the latest version and the predetermined version. When the latest version and the predetermined version are not continuous versions of the data set, the host server system 10 may get all of the intermediate version(s) between the latest version and the predetermined version from the tenant server system 5.

According to some embodiments, the host server system 10 may receive an identification information including a plurality of identifiers from the tenant server system 5, and the identification information may be associated with the data set, in which the issuing of the aforementioned at least one version request may include sending the data set identifiers to the tenant server system 5. In an embodiment, the data protection application may provide multiple binding methods for binding the SaaS applications such as that of the public cloud with the host server system 10 through one or more setting pages of the data protection application according to the access identifiers. According to an embodiment, in the beginning when establishing a backup task, the host server system 10 (e.g. the authentication handler) may import the access identifier provided by the public cloud provider from outside of the host server system 10. For example, the data protection application may guide the user with some hint messages, to make the user login onto a certain site of the public cloud provider with the public cloud account and password, and establish the backup task for the user with a task name. The data protection application may transmit the access identifier to the public cloud, which may verify the access identifier after authentication is completed. Afterward, the data protection application may have permission to download the SaaS data of the public cloud. According to another embodiment, when the user is interacting with the data protection application for establishing the backup task, as guided by the data protection application, it may be forwarded to an account authentication page of the service provider, in which when the account and password are correct, the service provider may give the access identifier. In the embodiments of the present application, the user's account and password will not leak to the host server system 10. As a result, the user's account and password can be protected.

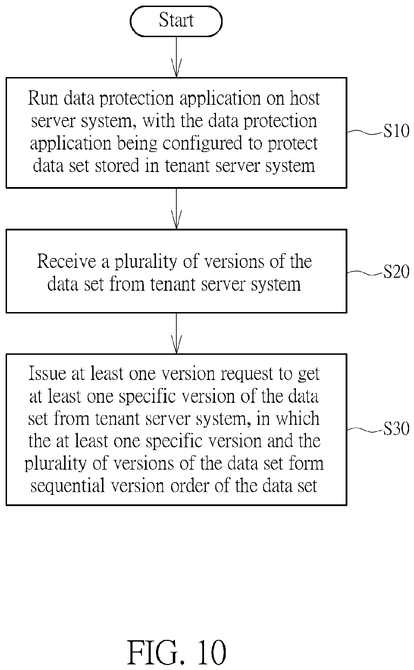

Fig. 10 illustrates a working flow of the data protection method according to an embodiment of the present disclosure. In Step S10, the processing circuit 110 may run the data protection application on host server system 10, with the data protection application being configured to protect the data set stored in the tenant server system 5. In Step S20, the host server system 10 may receive the plurality of versions of the data set from the tenant server system 5. In Step S30, the host server system 10 may issue the aforementioned at least one version request to get the aforementioned at least one specific version of the data set from the tenant server system 5, in which the at least one specific version and the plurality of versions of the data set form the sequential version order of the data set. For brevity, similar descriptions for this embodiment are not repeated in detail here.

According to some embodiments, under control of the processing circuit 110 running the data protection application (more particularly, the single instance handler such as the single instance framework 434), the host server system 10 may record a plurality of mapping relationships between keys and values into a hash table, in which the keys of the hash table include at least hashes of files in the tenant server system 5, and the values of the hash table include paths of the files in the tenant server system 5. For example, the keys of the hash table include size plus hash information of the files in the tenant server system 5, in which the size plus hash information of the files includes combinations of sizes of the files and the hashes of the files, respectively, but the present disclosure is not limited thereto. In some embodiment, when obtaining the latest version of the data set (e.g. a file), based on the hash table, the host server system 10 (e.g. the single instance handler running thereon) may check whether all the versions of the data set in the host server system 10 have the same characteristic information (e.g. the same size and the same hash value) as that of the latest version, to generate a first checking result, in which the first checking result indicates whether the latest backup version has the same characteristic information (e.g. the same size and/or the same hash value) in the host server system. According to the first checking result, the host server system 10 may determine whether to skip downloading the latest version. When the first checking result indicates that the latest backup version has the same characteristic information as that of the latest version, the host server system 10 may skip downloading the latest version; otherwise, the host server system 10 may download the latest version. For example, the aforementioned same characteristic information may include the same size and the same hash value. For another example, the aforementioned same characteristic information may include the same hash value. In some embodiments, when it is determined according to the first checking result to skip downloading the latest version, the host server system 10 may create pointing information regarding the latest backup version.

## Claims

1. A data protection method, **characterized in that** the method comprises:
running a data protection application on a host server system (10), the data protection application being configured to protect a data set stored in a tenant server system (5), wherein the host server system (10) and the tenant server system (5) are administered by different entities;
receiving a plurality of versions of the data set from the tenant server system (5); and
issuing at least one version request to get at least one specific version of the data set from the tenant server system (5), wherein the at least one specific version and the plurality of versions of the data set form a sequential version order of the data set.

2. The method of claim 1, **characterized in that** the method further comprises:
storing the plurality of versions of the data set and the at least one specific version of the data set to the host server system (10).

3. The method of claim 1, **characterized in that** the method further comprises:
monitoring a change event of a predetermined version of the data set; and
receiving a latest version of the data set after the change event is detected, wherein the latest version of the data set is revised from the predetermined version of the data set.

4. The method of claim 3, **characterized in that** the method further comprises:
issuing a content request to get the latest version of the data set.

5. The method of claim 3, **characterized in that** the method further comprises:
parsing the latest version of the data set to determine whether the latest version of the data set and the predetermined version of the data set are received in sequence.

6. The method of claim 1, **characterized in that** the method further comprises:
receiving an identification information from the tenant server system (5), the identification information being associated with the data set;
wherein the issuing of the at least one version request comprises sending the identification information to the tenant server system (5).

7. The method of claim 1, **characterized in that** the method further comprises:
monitoring an account change event of a target domain associated with the tenant server system (5); and
wherein when the account change event is detected, the method further comprising:
receiving another data set associated with a changed account.

8. A host server system (10), **characterized in that** the host server system (10) comprises:
a network interface circuit (120), arranged to couple the host server system (10) to at least one network;
a storage device interface circuit (130), arranged to install at least one storage device for storing information; and
a processing circuit (110), coupled to the network interface circuit (120) and the storage device interface circuit (130), arranged to control operations of the host server system (10), the operations comprising:
running a data protection application on the host server system (10), the data protection application being configured to protect a data set stored in a tenant server system (5), wherein the host server system (10) and the tenant server system (5) are administered by different entities;
receiving a plurality of versions of the data set from the tenant server system (5); and
issuing at least one version request to get at least one specific version of the data set from the tenant server system (5), wherein the at least one specific version and the plurality of versions of the data set form a sequential version order of the data set.

9. The host server system (10) of claim 8, **characterized in that** the processing circuit (110) stores the plurality of versions of the data set and the at least one specific version of the data set to the at least one storage device of the host server system (10).

10. The host server system (10) of claim 8, **characterized in that** the host server system (10) monitors a change event of a predetermined version of the data set, and receives a latest version of the data set after the change event is detected, wherein the latest version of the data set is revised from the predetermined version of the data set.

11. The host server system (10) of claim 10, **characterized in that** the host server system (10) issues a content request to get the latest version of the data set.

12. The host server system (10) of claim 10, **characterized in that** the host server system (10) parses the latest version of the data set to determine whether the latest version of the data set and the predetermined version of the data set are received in sequence.

13. The host server system (10) of claim 8, **characterized in that** the host server system (10) receives an identification information from the tenant server system (5), the identification information being associated with the data set, wherein the issuing of the at least one version request comprises sending the identification information to the tenant server system (5).

14. The host server system (10) of claim 8, **characterized in that** the host server system (10) monitors an account change event of a target domain associated with the tenant server system (5), wherein when the account change event is detected, the host server system (10) receives another data set associated with a changed account.

15. The method of claim 1 or the host server system (10) of claim 8, **characterized in that** the plurality of versions of the data set forms a non-sequential version order of the data set.
